Europäisches Patentamt

European Patent Office

Office européen des brevets

(19)

(11) Veröffentlichungsnummer : **0 062 829**
**B1**

(12) **EUROPÄISCHE PATENTSCHRIFT**

(45) Veröffentlichungstag der Patentschrift :
12.11.86

(51) Int. Cl.⁴ : **F 16 L 51/02**

(21) Anmeldenummer : **82102652.3**

(22) Anmeldetag : **29.03.82**

(54) **Mehrlagiger Kompensator mit zwischen den Lagen angeordneten Abstandshaltern.**

(30) Priorität : **10.04.81 DE 3114620**

(43) Veröffentlichungstag der Anmeldung :
**20.10.82 Patentblatt 82/42**

(45) Bekanntmachung des Hinweises auf die Patenterteilung : **12.11.86 Patentblatt 86/46**

(84) Benannte Vertragsstaaten :
**CH DE FR GB IT LI NL**

(56) Entgegenhaltungen :
**GB-A- 1 281 423**
**US-A- 3 183 022**

(73) Patentinhaber : **INTERATOM Gesellschaft mit beschränkter Haftung**
**Friedrich-Ebert-Strasse**
**D-5060 Bergisch Gladbach 1 (DE)**

(72) Erfinder : **Fortmann, Manfred**
**Christian-Heesen-Strasse 17**
**D-5063 Overath (DE)**
Erfinder : **Lehmann, Siegbert, Dipl.-Ing.**
**Kirchstrasse 22**
**D-5110 Alsdorf (DE)**

(74) Vertreter : **Mehl, Ernst, Dipl.-Ing. et al**
**Postfach 22 01 76**
**D-8000 München 22 (DE)**

EP 0 062 829 B1

**Beschreibung**

Die vorliegende Erfindung betrifft einen Kompensator nach dem Oberbegriff des ersten Anspruchs. Kompensatoren sind bekannte Bauelemente, um Wärmedehnungen in Rohrleitungen auszugleichen. Aus mehreren eng aneinander liegenden, eine gewisse Verschiebung zwischen ihnen zulassenden Lagen aufgebaute Kompensatoren werden dann verwendet, wenn bei sonst gegenüber einlagigen Kompensatoren unverändert bleibenden Eigenschaften (z. B. einer bestimmten Druckfestigkeit) das Dehnungsvermögen und die Lebensdauer des Kompensatorbalges erhöht werden soll. Befindet sich im Inneren des Balges ein Medium, dessen Austritt verhindert werden muß, kommt der Überwachung der einzelnen Lagen auf Lecks eine erhöhte Bedeutung zu. Dies kann in bekannter Weise dadurch geschehen, daß zwischen den verschiedenen so gebildeten Räumen Druckdifferenzen aufrecht erhalten werden, deren Veränderung Hinweise auf Lecks zu geben vermag. Um ein Aufeinandergleiten der einzelnen Lagen zu erleichtern, werden diese aus Blechen mit möglichst geringer Rauhtiefe hergestellt ; es hat sich nun gezeigt, daß der dann verbleibende sehr dünne Spalt einen Gastransport innerhalb annehmbarer Zeiten nicht zuläßt. Um die Spaltgröße zu erhöhen ist z. B. in der GB-A-1 281 423 bereits vorgeschlagen worden, ein Drahtgitter als Abstandhalter zwischen den einzelnen Lagen anzuordnen. Hierbei treten jedoch zu hohe örtliche Flächenpressungen auf, wodurch in den Blechen Kerben hervorgerufen werden, die den Ausgangspunkt für spätere Leckbildungen darstellen können. Durch das Verkeilen der Drähte in den Kerben wird darüber hinaus die Verschiebung zwischen den einzelnen Lagen behindert und damit die Dehnfähigkeit erheblich herabgesetzt ; der entscheidende Vorteil des mehrlagigen Kompensators gegenüber dem einlagigen ginge verloren. Bei Prüfungen des Kompensators mittels des bekannten Wirbelstromverfahrens wirken sich insbesondere die in Umfangrichtung verlaufenden Drähte störend aus.

Zusätzliche Probleme entstehen dann, wenn der Kompensator in Hochtemperaturkernenergieanlagen verwendet werden soll, in denen beispielsweise Helium mit geringen Verunreinigungen durch Wasserstoff bei temperaturen bis 950 °C zirkuliert. Insbesondere besteht dann die Gefahr, daß die einzelnen Lagen durch Reibverschweißen miteinander verbunden werden und der Kompensator dadurch seine Dehnfähigkeit einbüßt.

Es ist ferner ein dem Fachmann als « heterogene Gasphasenreaktion » bekanntes Verfahren geläufig, mittels dessen sehr gleichmäßige, fest haftende glatte Oxidschichten aufgebracht werden können. Derartige Oxidschichten werden durch Wasserstoff nicht angegriffen, verhindern vielmehr dessen Permeation und die seiner Isotopen Deuterium und Tritium.

Aufgabe der vorliegenden Erfindung ist ein mehrlagiger Kompensator, der zum Einsatz in Kernenergieanlagen der genannten Art geeignet ist und dessen Zwischenräume auf das etwaige Auftreten des im Inneren des Kompensators befindlichen Mediums überwacht werden können. Der Kompensator soll darüber hinaus mittels der Wirbelstromverfahrens ohne besondere Schwierigkeiten prüfbar sein.

Die Lösung dieser Aufgabe erfolgt durch die im kennzeichnenden Teil des ersten Anspruchs angegebenen Mittel. Durch die Verwendung von Streifen mit im wesentlichen flächenförmiger Berührung mit den benachbarten Lagen des Kompensators wird die Flächenpressung soweit herabgesetzt, daß ein Einkerben ausgeschlossen wird und günstigere Gleiteigenschaften erreicht werden. Durch die Anordnung parallel zur Längsachse sowie durch die geringe Höhe der Streifen (in der Größenordnung einiger Zehntel Millimeter) wird der störende Einfluß auf den üblicherweise in Umfangsrichtung durchgeführten Prüfvorgang nach dem Wirbelstromverfahren weitgehend herabgesetzt. Zwischen den Streifen verbleiben Spalte, die einen raschen Fluidtransport ermöglichen, so daß etwa in dieselben gelangende Fluide aus dem Inneren des infolge des Aufbringens eines Über- oder Unterdruckes dem entsprechenden Nachweisgeräten zugeführt werden.

Die im zweiten Anspruch vorgeschlagene Verkürzung der Streifen ermöglicht das Anlegen eines Ringspaltes, der die Spalte zwischen den einzelnen Streifen miteinander verbindet.

Die im dritten Anspruch vorgeschlagenen Materialien gewährleisten ein einwandfreies Gleiten der Streifen auf den benachbarten Lagen und verhindern ein Reibverschweißen, insbesondere in sauerstoffhaltiger Atmosphäre, da Chrom an seiner Oberfläche Sauerstoffmoleküle bindet.

Ein Ausführungsbeispiel der Erfindung ist in der Zeichnung dargestellt, und zwar zeigt

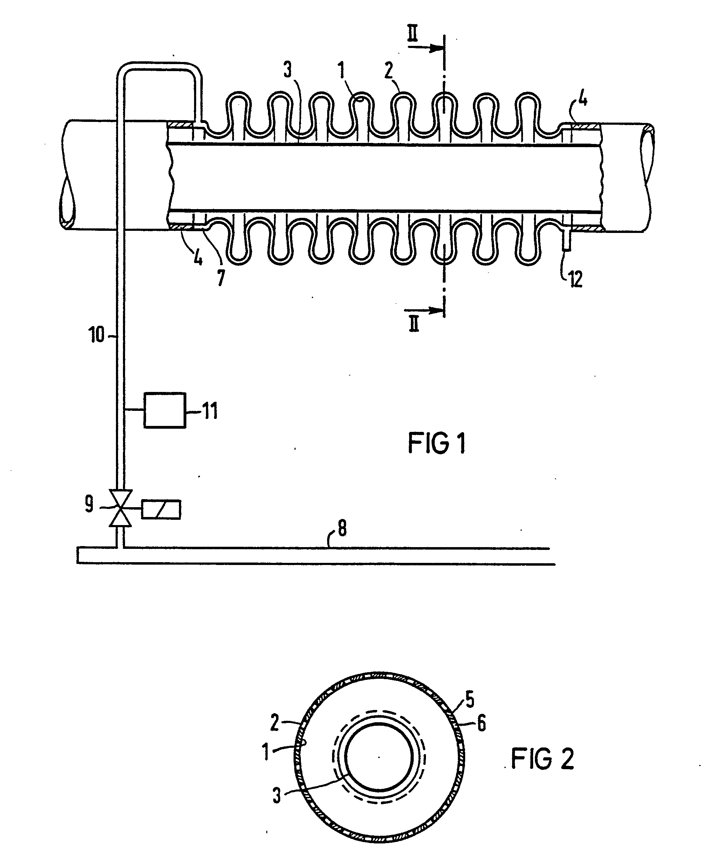

Figur 1 einen Längsschnitt und

Figur 2 einen Querschnitt entsprechend der Linie II-II der Figur 1 durch einen zweilagigen Kompensator.

Der Kompensator besteht aus einer Innenlage 1 und einer Außenlage 2. Innerhalb des Kompensators kann z. B. ein Gasführungsrohr 3 verlegt sein und der Zwischenraum zwischen diesem und der Innenlage 1 kann mit heißem Helium mit einem Druck von z. B. $45 \cdot 10^5$ Pa (45 bar) gefüllt sein. An seinen Enden weist der Kompensator gerade, ebenfalls aus Innen- und Außenlage bestehende Anschweißenden 4 auf, um seine Verbindung mit den benachbarten Teilen der Anlage zu erleichtern. Zwischen der Innen- und der Außenlage des Kompensators 1, 2 sind über den Umfang verteilt und parallel zur Längsachse Blechstreifen 5 angeordnet, die aus einem hochchromhaltigen Stahl mit einer Beschichtung aus Chromoxid bestehen und die beispielsweise die Querschnitt-

sabmessungen von 0,3 × 5 mm aufweisen. Zwischen den Streifen 5 verbleiben Spalte 6, die untereinander über je einen Ringspalt 7 in den Anschweißenden 4 miteinander in Verbindung stehen. Der Zwischenraum zwischen der Innen- 1 und Außenlage 2 kann über eine mittels eines Ventils (9) absperrbare Stichleitung 10 an eine Preßluftleitung 8 mit einem Druck von z. B. 2,5 · 10⁵ Pa (2,5 bar) angeschlossen sein. Ein Druckaufnahme- und Auswertegerät 11 überwacht den Druck in diesem Zwischenraum, wobei es sicher zweckmäßig ist, Kompensationsvorrichtungen z. B. für wechselnde Umgebungstemperaturen vorzusehen. Entsteht in der Innenlage 1 ein Leck, so macht sich dies dadurch bemerkbar, daß der vom Meßgerät 11 gemessene Druck ansteigt. Entsteht dagegen ein Leck in der Außenlage 2, sinkt der hier gemessen Druck entsprechend in die Nähe des Atmosphärendruckes ab. Es hat sich gezeigt, daß die vorgeschlagene Beschichtung der Streifen 5 in Verbindung mit einer sauerstoffhaltigen Atmosphäre auch bei hohen Temperaturen ein Reibverschweißen der Innenlage 1 mit der Außenlage 2 verhindert. Für die Dauerfestigkeit schädliche Kerben entstehen bei Aufeinandergleiten dieser verschiedenen Materialien nicht. Eine Kontrolle der Gasdurchlässigkeit der Spalte 6 kann durch Öffnen eines normalerweise verschlossenen zusätzlichen Stutzens 12 erfolgen.

**Patentansprüche**

1. Mehrlagiger Kompensator mit zwischen den Lagen (1, 2) angeordneten Abstandshaltern (5), in der Gestalt flacher, parallel zur Längsachse des Kompensators, über den Umfang verteilter Streifen, dadurch gekennzeichnet, daß die Streifen (5) einstückig mit rechteckigem Querschnitt von großer Breite im Verhältnis zur Dicke ausgebildet und in flächigem Kontakt zu den Kompensator lagen (1, 2) angeordnet sind, wobei zwischen ihnen Spalte (6) verbleiben.

2. Kompensator nach Anspruch 1, dadurch gekennzeichnet, daß die Streifen (5) an den Enden (4) des Kompensators derart verkürzt sind, daß mindestens ein umlaufender Ringspalt (7) entsteht.

3. Kompensator nach Anspruch 1 oder 2, dadurch gekennzeichnet, daß

a) die Streifen (5) aus einem Stahl mit einem Chromgehalt über 20 % bestehen und

b) die Streifen (5) an ihrer Oberfläche mit einer Chromoxid-Schicht versehen sind.

**Claims**

1. A multiple-layer compensator with spacers (5) arranged between the layers (1, 2) and which are in the form of flat strips distributed around the periphery parallel to the longitudinal axis of the compensator, characterised in that the strips (5) are integrally formed with a rectangular cross-section of great width in relation to the thickness and are arranged so as to be in surface contact with the compensator, gaps (6) remaining between said strips.

2. A compensator as claimed in Claim 1, characterised in that at the ends (4) of the compensator, the strips (5) are shortened to an extent such that at least one peripheral annular gap (7) is formed.

3. A compensator as claimed in Claim 1 or Claim 2, characterised in that

a) the strips (5) are made of a steel having a chromium content of over 20 %, and

b) the strips (5) are provided with a surface layer of chromium oxide.

**Revendications**

1. Compensateur à plusieurs couches muni d'entretoises (5) disposées entre les couches (1, 2) et sous forme de bandes plates, parallèles à l'axe longitudinal du compensateur et réparties sur le pourtour, caractérisé en ce que les bandes (5) sont d'une seule pièce, en ayant une section transversale rectangulaire de largeur plus grande que l'épaisseur et sont disposées en contact de surface par rapport aux couches (1, 2) du compensateur, en laissant subsister entre elles des interstices (6).

2. Compensateur suivant la revendication 1, caractérisé en ce que les bandes (5) sont raccourcies aux extrémités (4) du compensateur, de manière à créer au moins un interstice annulaire (7) faisant tout le tour.

3. Compensateur suivant la revendication 1 ou 2, caractérisé en ce que

a) les bandes (5) sont en acier ayant une teneur en chrome supérieure à 20 %,

b) les bandes (5) sont munies sur la surface d'une couche d'oxyde de chrome.

FIG 1

FIG 2